(19) Europäisches Patentamt / European Patent Office / Office européen des brevets

(11) **EP 3 156 849 B1**

(12) **EUROPEAN PATENT SPECIFICATION**

(45) Date of publication and mention
of the grant of the patent:
**24.05.2023 Bulletin 2023/21**

(21) Application number: **16190928.8**

(22) Date of filing: **27.09.2016**

(51) International Patent Classification (IPC):
**G03G 15/043** (2006.01)    **G03G 15/04** (2006.01)

(52) Cooperative Patent Classification (CPC):
**G03G 15/0435;** G03G 15/0409

(54) **EXPOSURE UNIT, EXPOSURE MECHANISM, AND IMAGE FORMATION DEVICE**

BELICHTUNGSEINHEIT, BELICHTUNGSMECHANISMUS UND
BILDERZEUGUNGSVORRICHTUNG

UNITE D'EXPOSITION, MECANISME D'EXPOSITION ET DISPOSITIF DE FORMATION D'IMAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.10.2015 CN 201510673842**

(43) Date of publication of application:
**19.04.2017 Bulletin 2017/16**

(73) Proprietor: **Ricoh Company, Ltd.**
**Tokyo 143-8555 (JP)**

(72) Inventors:
• **FUNAMOTO, Noriaki**
**Tokyo 143-8555 (JP)**
• **SATO, Yuki**
**Tokyo 143-8555 (JP)**

• **XU, Chong**
**Shanghai (CN)**
• **XIONG, Weiliang**
**Shanghai (CN)**
• **TONG, Zhao**
**Shanghai (CN)**
• **QU, Zhongqiu**
**Shanghai (CN)**

(74) Representative: **J A Kemp LLP**
**80 Turnmill Street**
**London EC1M 5QU (GB)**

(56) References cited:
EP-A1- 1 306 729      EP-B1- 1 582 907
JP-A- H0 535 055      JP-A- H0 630 169
JP-A- 2006 235 177    US-A1- 2003 063 360

**Description**

The present disclosure relates to an exposure unit as well as an exposure mechanism and image formation device including the exposure unit.

Up to now, an image formation device such as a printer or a copier has been widely used in offices, etc. In general, this kind of image formation device contains an exposure unit and an image formation unit. The exposure unit gives an exposure signal generated on the basis of image data to the image formation unit. And then, the image formation unit forms an image on a recording medium (e.g., a sheet of paper) on the grounds of the exposure signal.

The image formation unit is usually provided below the exposure unit, and generally includes an integrated assembly consisting of a photoconductor drum, at least one toner cartridge, etc. This kind of integrated assembly is an easily-consumed product, so it needs to be replaced periodically.

The exposure unit is generally secured to the upper cover part of the image formation device. The reason is that on the one hand, the laser beam from the exposure unit may be in a stable state, and on the other hand, once the upper cover part is opened, the exposure unit may depart from the image formation unit together with the upper cover part so that it is easy to take out and replace the integrated assembly by a user.

However, since the exposure unit is located above the image formation unit, the space for replacing the integrated assembly is still relatively small. That is, it is still relatively difficult to replace the integrated assembly. As a result, when replacing the integrated assembly, it is necessary to first demount the exposure unit, thereby resulting in wasting time and energy so as to bring inconvenience for the user.

In order to solve the above-mentioned problem of inconvenience, the exposure unit may be detachably mounted on the upper cover part. When the user wants to take out the exposure unit for replacement or due to a paper jam, he/she only needs to open the upper cover part. In this way, it is very easy to demount the exposure unit. This kind of image formation device is disclosed in Japan Patent Application Publication No. 2008-096957, for example.

However, in this kind of image formation device, just because the exposure unit needs to be easily demounted, an installation clearance must be exist between the exposure unit and the upper cover part. Due to this, the position of the exposure unit after reinstallation may have an offset, so that the laser beam from the exposure unit may deviate from a predetermined optical path and may not arrive at a predetermined position on the surface of the photoconductor drum. As a result, the electrostatic latent image generated on the photoconductor drum is obviously nonuniform, thereby resulting in dramatically reducing the quality of the formed image.

JP 2006-235177 A discloses a scanner unit attached to the lower surface of an upper surface cover. A laser emitting part, a rotatably driven polygon mirror, lenses and a reflecting mirror are included in the scanner unit.

JP H05 35055 A discloses an optical system unit comprising an upper section that can be opened upward by using a supporting shaft as a fulcrum with reference to a lower section. A shutter plate is installed on the back side of the optical system unit and a projecting piece is made to abut on the housing of an image forming unit when the upper section is closed and photosensitive drum is irradiated with the laser beam through slits. When the upper section is open, the shutter plate is pressed by a coil spring, and then slightly rotated clockwise by using a pin as a fulcrum so that the laser beam can be prevented from leaking to the outside through the EP 1582 907 A1 represents further relevant prior art. slit.

Therefore, it is necessary to provide an exposure unit as well as an exposure mechanism and image formation device containing the exposure unit whose position may not have an offset after reinstallation, so that it is possible to ensure that the laser beam from the exposure unit may not deviate from the predetermined optical path. In this way, it is possible to guarantee the quality of the formed image.

According to the present invention there is provided an image formation device as specified in the claims.

As a result, by utilizing the above-described exposure unit, exposure mechanism, and image formation device, since the distance between the end reflector and the surface of the photoconductor drum is less than the separation distance between any two adjacent reflectors as well as the distance between the forefront reflector and the rotation polygon mirror (i.e., the distance from the end reflector to the surface of the photoconductor drum is the smallest one), although the position of the exposure mechanism after it is reinstalled on the upper cover part has an offset, it is also possible to restrain the occurrence of a deviation of the predetermined optical path. In this way, the focused beam may arrive at the predetermined position on the surface of the photoconductor drum as accurately as possible so as to effectively improve the uniformity of the electrostatic latent image generated, thereby being able to guarantee the quality of the formed image.

In the accompanying drawings:

FIG. 1 is a perspective view of an image formation device;
FIG. 2 illustrates the internal structure of the image formation device;
FIG. 3 illustrates the internal structure of the image formation device when its upper cover part is opened;

FIG. 4 illustrate a structure of an exposure mechanism in the image formation device; and
FIG. 5 illustrates the positional relationship between the exposure mechanism and a photoconductor drum in the image formation device.

In order to let those people skilled in the art better understand the present disclosure, hereinafter, the embodiments of the present disclosure will be concretely described with reference to the drawings. However it should be noted that the same symbols, which are in the specification and the drawings, stand for the constructional elements having basically the same function and structure, and the repeated explanations for the constructional elements are omitted.

According to a first aspect of the present disclosure, an exposure unit is provided which may generate an exposure signal on the grounds of image data. The exposure unit is disposed inside an image formation device including a frame body and an upper cover part, and is installed on the lower surface of the upper cover part. The frame body accommodates an image formation unit which is used for forming an image on a recording medium (e.g., a sheet of paper) on the basis of the exposure signal. The upper cover part may be rotatably opened and closed with respect to the frame body.

The exposure unit may include a laser beam emitter, a rotation polygon mirror part, an f-theta lens, and plural reflectors. The laser beam emitter is used for emitting a laser beam corresponding to the exposure signal. The rotation polygon mirror part includes a rotation polygon mirror, and is used for receiving and deviating the laser beam. The f-theta lens is used for receiving the deviated laser beam and generating a focused beam for emission. The plural reflectors are sequentially disposed on a predetermined optical path whose start point is the f-theta lens and whose end point is the surface of a photoconductor drum of the image formation unit, and are sequentially arranged according to predetermined separation distances for receiving the focused beam and reflecting the focused beam plural times along the predetermined optical path so as to cause the focused beam to arrive at the surface of the photoconductor drum.

The plural reflectors may include a forefront reflector and an end reflector. The forefront reflector is used for receiving the focused beam, and the end reflector is used for reflecting the focused beam to the surface of the photoconductor drum. The distance from the end reflector to the surface of the photoconductor drum is less than both the predetermined separation distances and the distance from the forefront reflector to the rotation polygon mirror.

In particular, the plural reflectors may include N reflectors. Here N is an integer which is greater than or equal to two. The N reflectors are sequentially arranged along the predetermined optical path, and are sequentially called a "first reflector", a "second reflector", ..., and an "N-th reflector". The distance between the first reflector and the second reflector is called a "first predetermined separation distance $I_1$", the distance between the second reflector and the third reflector is called a "second predetermined separation distance $I_2$", ..., and the distance between the (N-1)-th reflector and the N-th reflector is called an "(N-1)-th predetermined separation distance $I_{N-1}$". The first reflector serves as the forefront reflector, and the distance from the forefront reflector to the rotation polygon mirror is $D_f$. The N-th reflector serves as the end reflector, and the distance between the end reflector and the surface of the photoconductor drum is $D_e$. Here, $D_f$ and $D_e$ as well as $I_1$, $I_2$, ..., and $I_{N-1}$ satisfy the following condition, namely, $D_e < I_{N-1} < ... I_2 < I_1 < D_f$.

Moreover, the plural reflectors may also include two reflectors called a "first reflector" and a "second reflector", respectively. The distance between the first reflector and the second reflector is $I_1$. The first reflector serves as the forefront reflector, and the distance from the forefront reflector to the rotation polygon mirror is $D_f$. The second reflector serves as the end reflector, and the distance between the end reflector and the surface of the photoconductor drum is $D_e$. Here, $D_f : I_1 : D_e = 44$-$47 : 31$-$33 : 28$-$30$. Preferably, $D_f : I_1 : D_e = 45.5 : 31.3 : 30.5$.

Furthermore, the distance $D_e$ between the end reflector and the surface of the photoconductor drum is 30.5 mm.

In addition, the laser beam emitter may also emit two or more laser beams.

According to a second aspect of the present disclosure, an exposure mechanism is provided which may generate an exposure signal on the basis of image data. The exposure mechanism is disposed inside an image formation device having a frame body and an upper cover part. The frame body accommodates an image formation unit which is used for forming an image on a recording medium such as a sheet of paper and so forth on the grounds of the exposure signal. The upper cover part may be rotatably opened and closed with respect to the frame body.

The exposure mechanism may include an installation tray and an exposure unit. The installation tray is mounted on the lower surface of the upper cover part, and the exposure unit is disposed in the installation tray for generating the exposure signal. The exposure unit may be one according to the first aspect of the present disclosure.

According to a third aspect of the present disclosure, an image formation device is provided which may include a frame body, an upper cover part, an exposure mechanism, and an image formation unit. The upper cover part is installed on the frame body, and may be rotatably opened and closed with respect to the frame body. The exposure mechanism is mounted on the lower surface of the upper cover part, and is used for generating an exposure signal on the basis of image data. The image formation unit is accommodated inside the frame body, and is used for generating a toner image on a recording medium such as a sheet of paper and so forth on the grounds of the exposure signal so as to carry out an image formation process. The exposure mechanism may be one according to the second aspect of the present disclosure.

Furthermore, the image formation device may further include a scan unit which is disposed in the upper cover part and is used for scanning a document so as to generate the image data.

Moreover, the image formation device may further include a fixing unit and a drive motor. The fixing unit is used for heating and fixing the toner image generated on the recording medium so as to finish the image formation process. The drive motor is connected to a rotation polygon mirror which is included in a rotation polygon mirror part, so as to drive the rotation polygon mirror to rotate for receiving and deviating a laser beam. Here, the drive motor is provided at a position far away from the fixing unit.

<Embodiments>

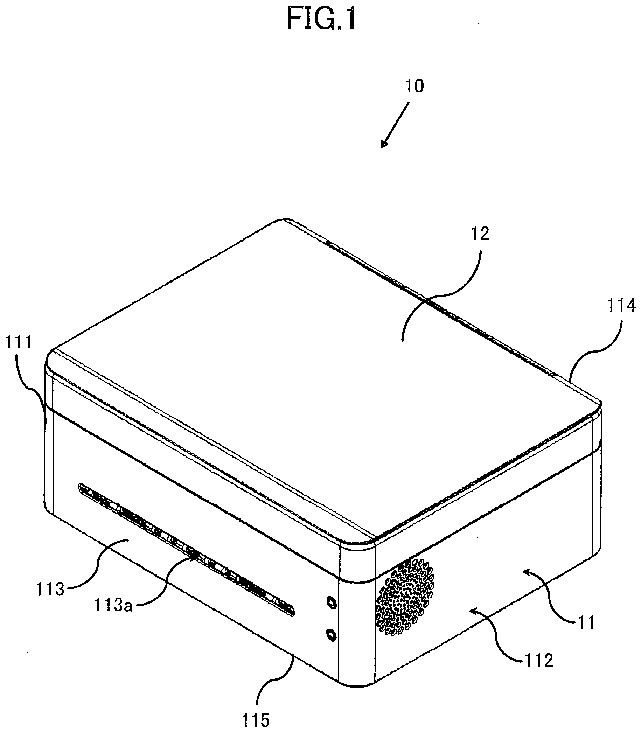

FIG. 1 is a perspective view of an image formation device 10.

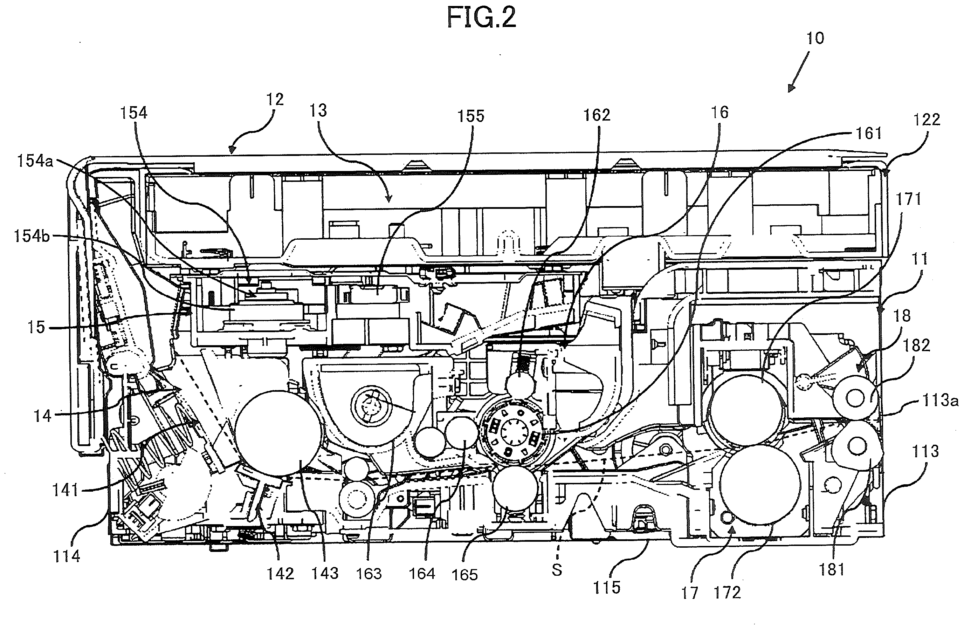

FIG. 2 illustrates the internal structure of the image formation device 10.

The image formation device 10 may be connected to an upper-stream device which is not shown in the drawing so as to receive an electrical signal of image data sent from the upper-stream device. In one embodiment, the image formation device 10 may be a miniature multifunction printer, i.e., an ultra-thin multifunction printer.

As presented in FIGS. 1 and 2, the image formation device 10 includes a frame body 11, an upper cover part 12, a scan unit 13, a paper feed unit 14, an exposure mechanism 15, an image formation unit 16, a fixing unit 17, and a paper discharge unit 18.

The frame body 11 has a cuboid shape, and includes a left side plate 111, a right side plate 112, a front side plate 113, a rear side plate 114, and a bottom plate 115. A paper outlet 113a is formed on the front side plate 113.

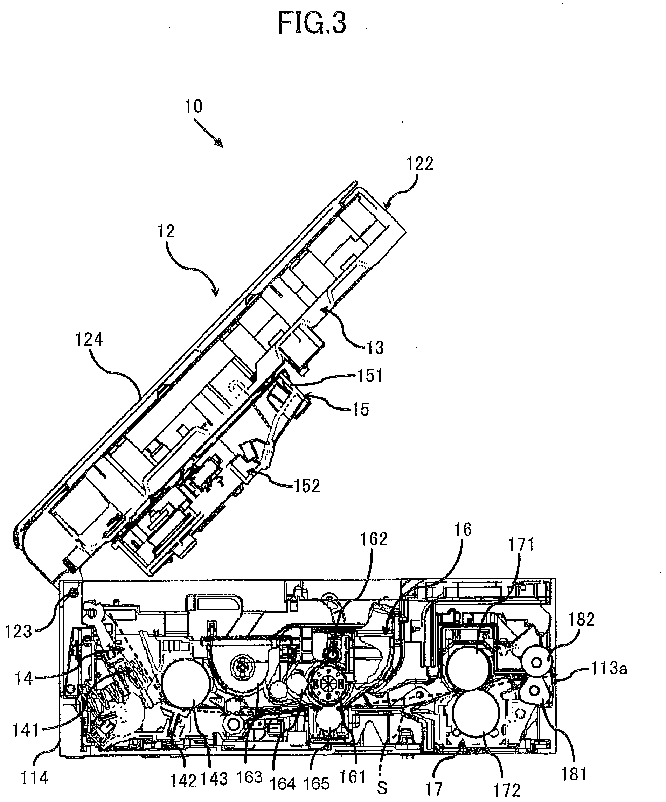

FIG. 3 illustrates the internal structure of the image formation device 10 when its upper cover part 12 is opened.

As presented in FIGS. 1 to 3, the upper cover part 12 is mounted on the rear side plate 114, and contains a cover main body 122, a pivot 123, and an upper cover plate 124.

The cover main body 122 is installed on the rear side plate 114 by using the pivot 123, and may be rotatably opened or closed with respect to the frame body 11.

The upper cover plate 124 is installed on the left end of the cover main body 122 by using a rotation shaft which is not presented in the drawings, and may be rotatably opened or closed with respect to the cover main body 122.

The scan unit 13, which is used for scanning a document (not presented in the drawings) so as to generate image data, is disposed inside the cover main body 122, and is located under the upper cover plate 124. When it is necessary to conduct a scan process, the user may open the upper cover plate 124 so as to put the document on the scan region of the scan unit 13, and then close the upper cover plate 124. After that, it is possible to scan the document.

The paper feed unit 14 may supply a recording medium (e.g., a sheet of paper), which is not presented in the drawings, to the image formation unit 16. The paper feed unit 14 includes a paper inlet (not presented in the drawings), a paper feed tray 141, a paper separation member 142, and a paper feed roller 143.

The paper inlet is used to let the recording medium enter the frame body 11 from the outside.

The paper feed tray 141 is used for stacking, for example, plural sheets of paper thereon, and is disposed between the paper inlet and the bottom 115.

The paper separation member 142 is mounted on the bottom plate 115, and is located near the bottom of the paper feed tray 141. The paper separation member 142 is used to separate the plural sheets of paper stacked on the paper feed tray 141, and then to supply the separated sheets of paper to the paper feed roller 143.

The paper feed roller 143 is set above the paper separation member 142, and is used to transport the separated sheets of paper to the image formation unit 16.

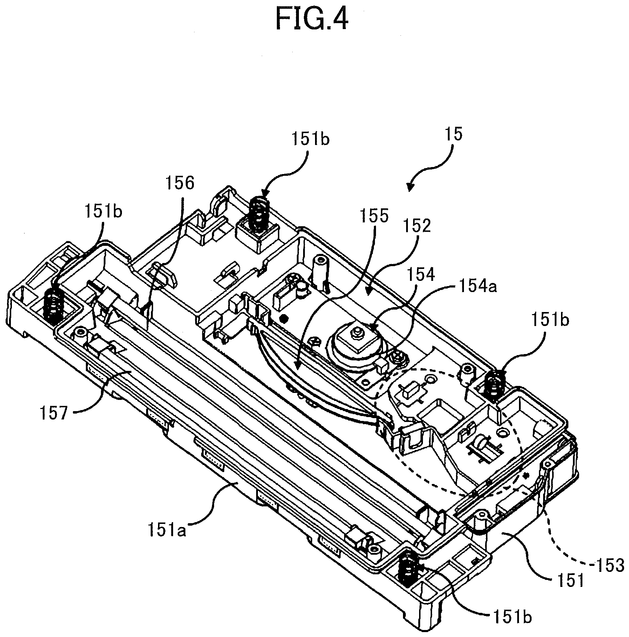

FIG. 4 illustrate the structure of an exposure mechanism 15 in the image formation device 10.

As presented in FIGS. 2 to 4, the exposure mechanism 15 may be detachably installed on the lower surface of the cover main body 122. The exposure mechanism 15 is used to generate, on the basis of the image data sent from the upstream device or transmitted from the scan unit 13, an exposure signal, and then to send the exposure signal to the image formation unit 16. The exposure mechanism 15 has an installation tray 151 and an exposure unit 152.

The installation tray 151 is mounted on the lower surface of the cover main body 122, and is used for supporting and securing the exposure unit 152. The installation tray 151 has a tray main body 151a and four installation members 151b. At the surrounding area of the tray main body 151a, four installation holes are provided which are hidden by the installation members 151b. The four installation members 151b enters the cover main body 122 through the four installation holes, and are fixedly connected to the cover main body 122. In this way, the tray main body 151a may be mounted on the lower surface of the cover main body 122. In one embodiment, each of the four installation members 151b may be a spring bolt.

The exposure unit 152 is disposed in the installation tray 151, and is installed on the cover main body 122 so as to generate the exposure signal. The exposure unit 152 has a laser beam emitter 153, a rotation polygon mirror part 154, an f-theta lens 155, and two reflectors 156 and 157.

The laser beam emitter 153 is secured at the right portion of the cover main body 122, and is used to emit a laser beam corresponding to the exposure signal.

The rotation polygon mirror part 154 is secured at the central portion of the cover main body 122, and includes a rotation polygon mirror 154a and a drive motor 154b. The rotation polygon mirror 154a is used to receive the laser beam sent from the laser beam emitter 153, and to deviate the laser beam so as to let the laser beam arrive at a predetermined position on the f-theta lens 155. The drive motor 154b is connected to the rotation polygon mirror 154a, and is used to drive the rotation polygon mirror 154a so as to let it rotate according to a predetermined velocity.

The f-theta lens 155 is used to receive the deviated laser beam, and then to generate a focused laser beam for emission.

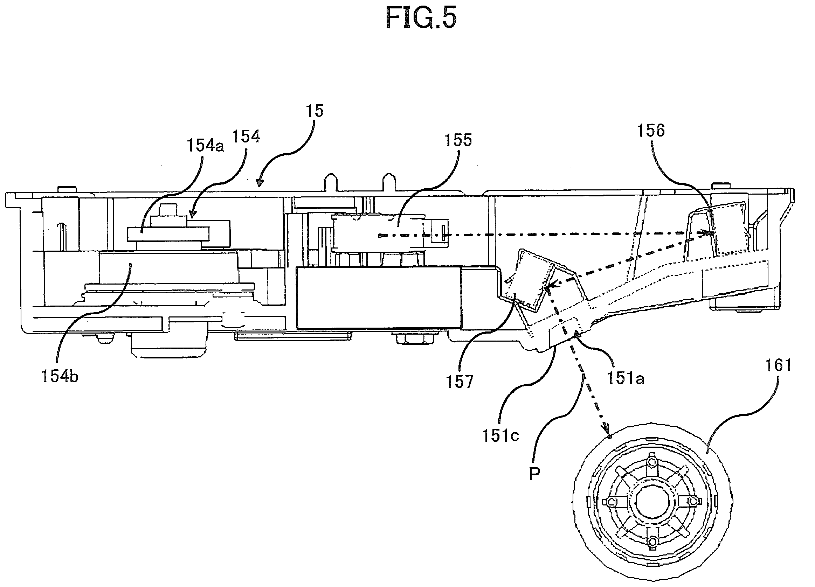

FIG. 5 illustrates the positional relationship between the exposure mechanism 15 and a photoconductor drum 161 in the image formation device 10.

As presented in FIGS. 4 and 5, the two reflectors 156 and 157 (hereinafter, also called a "first reflector 156" and a "second reflector 157") are sequentially disposed on a predetermined optical path P whose start point is the f-theta lens 155 and whose end point is the surface of the photoconductor drum 161 in the image formation unit 16, and are sequentially arranged along the predetermined optical path P according to a predetermined separation distance $l_1$. The first and second reflectors 156 and 157 are used to receive the focused laser beam, and to reflect the focused laser beam plural times along the predetermined optical path P so as to let the focused laser beam arrive at the surface of the photoconductor drum 161.

In particular, the first reflector 156 is located between the f-theta lens 155 and the second reflector 157 to serve as a forefront reflector for receiving the focused laser beam emitted from the f-theta lens 155, and reflects the focused laser beam to the second reflector 157. The second reflector 157 is located between the photoconductor drum 161 and the first reflector 156 to serve as an end reflector for reflecting the focused laser beam from the first reflector 156 to a predetermined position on the surface of the photoconductor drum 161.

In addition, a loophole 151a is disposed on the installation tray 151, and is covered by a transparent glass plate 151c. In this way, the focused laser beam reflected from the second reflector 157 may arrive at the surface of the photoconductor drum 161 through the loophole 151a, and suspended substance such as toner and so on may not enter the exposure mechanism 15 due to the blocking of the transparent glass plate 151c.

The distance between the first reflector 156 and the rotation polygon mirror 154a is $D_f$, and the distance between the first reflector 156 and the second reflector 157 is $l_1$. The distance from the second reflector 157 to the surface of the photoconductor drum 161 is $D_e$, and

$D_e$ is less than both $l_1$ and $D_f$. In one embodiment, $D_f$ is 45.5 mm, $l_1$ is 31.3 mm, and $D_e$ is 30.5 mm, namely, $D_e < l_1 < D_f$.

As presented in FIGS. 2 and 3, the image formation unit 16 is located below the exposure mechanism 15, and is used for receiving an exposure signal from the exposure mechanism 15 so as to form a toner image on a recording medium. The image formation unit 16 contains the photoconductor drum 161, a charged roller 162, at least one toner cartridge 163, a development roller 164, and a transfer roller 165. The charged roller 162 is used to supply electricity to the photoconductor drum 161 so as to let its surface be uniformly charged. The charged photoconductor drum 161 may generate an electrostatic latent image on its surface by receiving the focused laser beam. The at least one toner cartridge 163 is used to accommodate toner. The development roller 164 is used to supply the toner in the at least one toner cartridge 163 to the photoconductor drum 161 so as to carry out development with respect to the electrostatic latent image. The transfer roller 165 is used to transfer the toner image on the surface of the photoconductor drum 161 onto the recording medium. The photoconductor drum 161 and the transfer roller 165 are disposed facing each other, and the recording medium may be put between the photoconductor drum 161 and the transfer roller 165 so as to be transported to the fixing unit 17.

In one embodiment, the photoconductor drum 161, the charged roller 162, the at least one toner cartridge 163, and the development roller 164 in the image formation unit 16 may be integrated as an all-in-one (AIO) assembly which is detachable. In this way, as presented in FIG. 3, after the upper cover part 12 is opened, the exposure mechanism 15 departs from the image formation unit 16 so that it is easy for the user to exchange, for example, the image formation unit 16.

The fixing unit 17 is located on the right portion of the image formation unit 16, and is used to heat and fix the toner image on the recording medium so as to finish image formation. The fixing unit 17 includes a fixing roller 171, a heat source (not presented in the drawings), and a pressure roller 172 for fixing. The fixing roller 171 is used for conducting fixing with respect to the toner image on the recording medium. The heat source is disposed inside the fixing roller 171, and serves as a heating means for providing heat to the fixing roller 171. The pressure roller 172 is used for applying pressure to the fixing roller 171. The fixing roller 171 and the pressure roller 172 are disposed facing each other so as to be able to fix the toner image on the recording medium which is located between the two, and the recording medium after the toner image thereon is fixed may be transported by the two.

The paper discharge unit 18 contains a transport roller 181 and a pressure roller 182 for paper discharge. The recording medium after the toner image thereon is fixed may be put between the transport roller 181 and the pressure roller 182 so as to be transported by the two to the paper outlet 113a for paper discharge.

From the above description, it may be understood that as presented in FIGS. 2 and 3, a paper transport path S indicated by a dotted line therein is generated from the surface of the paper feed tray 141, between the paper separation member 142 and the paper feed roller 143, between the photoconductor drum 161 and the transfer roller 164, between the fixing roller 171 and the pressure roller 172, between the transport roller 181 and the pressure roller 182, and to the paper outlet 113a. The recording medium may be transported along the paper transport path S on which image formation is finished between the fixing roller 171 and the pressure roller 172.

In particular, in the image formation device 10, as presented in FIGS. 2 and 3, first a recording medium stacked on the paper feed tray 141 is pushed along the paper transport path S as so to touch the paper feed roller 143, and enters between the paper feed roller 143 and the paper separation member 142 as the paper feed roller 143 rotates.

And then, the recording medium is transported by the paper feed roller 143 to the exposure unit 152.

At this time, the exposure unit 152 generates an exposure signal on the basis of image data sent by the upstream device or transmitted from the scan unit 13, and a laser beam corresponding to the exposure signal is emitted by the laser beam emitter 153. The rotation polygon mirror 154a receives and deviates the laser beam so as to let the laser beam arrive at a predetermined position on the f-theta lens 155. The f-theta lens 155 receives the deviated laser beam so as to generate and emit a focused laser beam. The first reflector 156 receives the focused laser beam and reflects the focused laser beam to the second reflector 157. The second reflector 157 reflects the focused laser beam to a predetermined position on the surface of the photoconductor drum 161.

The photoconductor drum 161 receives the focused laser beam, and generates an electrostatic latent image on its surface. Then the development roller 164 provides the toner in the at least one toner cartridge 163 to the photoconductor drum 161 so that a toner image corresponding to the electrostatic latent image may be formed on the surface of the photoconductor drum 161. And then, the transfer roller 165 transfers the toner image on the surface of the photoconductor drum 161 onto the recording medium which is located between the transfer roller 165 and the photoconductor drum 161, and at the same time, the recording medium is transported to the fixing unit 17 by the transfer roller 165 and the photoconductor drum 161 along the paper transport path S.

After that, the heat source inside the fixing unit 17 provides heat to the fixing roller 171, and the fixing roller 171 and the pressure roller 172 heat and pressurize the recording medium onto which the toner image on the surface of the photoconductor drum 161 has been transferred, so as to finish image formation. And then, the recording medium, which is located between the fixing roller 171 and the pressure roller 172, is transported to the transport roller 181 and the pressure roller 182 for paper discharge.

Finally the transport roller 181 and the pressure roller 182 transport the recording medium, which is located between the two, to the paper outlet 113a so as to finish a print process.

<Effects of Embodiments>

According to the exposure unit 152, the exposure mechanism 15, and the image formation device 10, the distance $D_e$ from the second reflector 157 to the surface of the photoconductor drum 161 is not only less than the distance $D_f$ from the first reflector 156 to the rotation polygon mirror 154a but also less than the separation distance $l_1$ between the first reflector 156 and the second reflector 157; that is, the distance $D_e$ from the second reflector 157 to the surface of the photoconductor drum 161 is the smallest one. As a result, although the position of the exposure mechanism 152 after it is reinstalled on the upper cover part 12 has an offset, it is also possible to restrain the occurrence of a deviation of the predetermined optical path P. In this way, the focused beam may arrive at the predetermined position on the surface of the photoconductor drum 161 as accurately as possible, so as to improve the uniformity of the electrostatic latent image generated on the surface of the photoconductor drum 161, thereby being able to guarantee the quality of the formed image.

Moreover, the distance $D_f$ between the first reflector 156 and the rotation polygon mirror 154a, the separation distance $l_1$ between the first reflector 156 and the second reflector 157, and the distance $D_e$ between the second reflector 157 and the surface of the photoconductor drum 161 may satisfy $D_f > l_1 > D_e$. As a result, on the one hand, it is possible to further restrain the occurrence of a deviation of the predetermined optical path P so as to improve the uniformity of the electrostatic latent image generated on the surface of the photoconductor drum 161, thereby being able to get an image having good quality; on the other hand, it is also possible to reduce the height of the exposure unit 152 so as to reduce the height of the image formation device 10.

Furthermore, the distance $D_f$ between the first reflector 156 and the rotation polygon mirror 154a, the separation distance $l_1$ between the first reflector 156 and the second reflector 157, and the distance $D_e$ between the second reflector 157 and the photoconductor drum 161 may be 45.5 mm, 31.3 mm and 30.5 mm, respectively. As a result, it is possible to further restrain the occurrence of a deviation of the predetermined optical path P so as to improve the uniformity of the electrostatic latent image generated on the surface of the photoconductor drum 161, thereby being able to acquire an image having good quality.

Additionally, as presented in FIG. 2, the position of the AIO assembly (i.e., the photoconductor drum 161, the charged roller 162, the at least one toner cartridge 163, and the development roller 164 in the image formation unit 16) is a little lower than the positions of the rotation polygon mirror 154a and the drive motor 154b; that is, the AIO assembly is disposed at a position whose height is different from the heights of the positions of the rotation polygon mirror 154a and the drive motor 154b. As a result, it is possible to reduce the height of the image formation device 10.

Moreover, as presented in FIG. 2, the position of the image formation unit 16 is not located on the rotation axis of the rotation polygon mirror 154a. As a result, it is also possible to reduce the height of the image formation device 10.

In addition, as presented in FIG. 2, the drive motor 154b is disposed far away from the fixing unit 17 containing the heat resource, so that the thermal deformation of the rotation polygon mirror 154a and so on may be restrained. As a result, it is possible to improve the accuracy of the predetermined optical path P so as to obtain an image having good quality.

Of course, the exposure unit, the exposure mechanism, and the image formation device according to the embodiments of the present disclosure are not limited to the above-described structures.

Here it should be noted that the image formation device 10 contains the scan unit 13; that is, the image formation device 10 is a kind of multi-functional printer. However, the image formation device 10 may also not contain the scan unit 13.

Moreover, as described above, in the image formation device 10, the distance $D_e$ between the second reflector 157 and the surface of the photoconductor drum 161, the separation distance $I_1$ between the first reflector 156 and the second reflector 157, and the distance $D_f$ between the first reflector 156 and the rotation polygon mirror 154a meet $D_e < I_1 < D_f$. However, the present disclosure is not limited to this. As long as $D_e$ is the smallest one among the three, the three may satisfy another relationship.

Furthermore, as described above, in the image formation device 10, the distance $D_f$ between the first reflector 156 and the rotation polygon mirror 154a, the separation distance $I_1$ between the first reflector 156 and the second reflector 157, and the distance $D_e$ between the second reflector 157 and the surface of the photoconductor drum 161 may be 45.5 mm, 31.3 mm, and 30.5 mm, respectively. However, the present disclosure is not limited to this. As long as $D_e$ is the smallest one among the three, the three may take other values.

Additionally, as described above, in the image formation device 10, the distance $D_f$ between the first reflector 156 and the rotation polygon mirror 154a, the separation distance $I_1$ between the first reflector 156 and the second reflector 157, and the distance $D_e$ between the second reflector 157 and the surface of the photoconductor drum 161 may satisfy $D_f : I_1 : D_e = 45.5 : 31.3 : 30.5$. However, the present disclosure is not limited to this. As long as $D_e$ is the smallest one among the three, the three may also take other values, for example, $D_f : I_1 : D_e = 44$-

Moreover, as described above, in the image formation device 10, there are only two reflectors. However, the present disclosure is not limited to this. That is, more than two reflectors may be installed in the image formation device 10. For example, the number of reflectors may be N which is an integer greater or equal to two. The N reflectors are sequentially arranged along the predetermined optical path P and are sequentially called a "first reflector", a "second reflector", ..., and an "N-th reflector". The distance between the first reflector and the second reflector is called a "first predetermined separation distance $I_1$", the distance between the second reflector and the third reflector is called a "second predetermined separation distance $I_2$", ..., and the distance between the (N-1)-th reflector and the N-th reflector is called an "(N-1)-th separation distance $I_{N-1}$". The first reflector serves as a forefront reflector, and the distance from the forefront reflector to the rotation polygon mirror 154a is $D_f$. The N-th reflector serves as an end reflector, and the distance between the end reflector and the surface of the photoconductor drum 161 is $D_e$. In this case, in order to achieve the purpose of restraining the occurrence of a deviation of the predetermined optical path P, it is necessary to let $D_e$ be the smallest one among $D_f$, $D_e$, $I_1$, $I_2$, ..., and $I_{N-1}$.

In addition, as described above, in the image formation device 10, the laser beam emitter 153 emits only one laser beam. However, the present disclosure is not limited to this. That is, the laser beam emitter 153 may also emits two or more laser beams. In this way, it is possible to reduce the rotation velocity of the drive motor 154b so as to restrain the temperature increase of the exposure unit 152. As a result, it is possible to avoid the thermal deformation of the polygon mirror 154a and so forth, so as to be able to improve the accuracy of the predetermined optical path P.

While the present disclosure is described with reference to the specific embodiments chosen for purpose of illustration, it should be apparent that the present disclosure is not limited to these embodiments, but numerous modifications could be made thereto by those people skilled in the art without departing from the basic concept and technical scope of the present disclosure, as defined by the appended claims.

**Claims**

1. An image formation device (10) comprising:

   a frame body (11) accommodating an image formation unit (16), the image formation unit configured to form an image based on an exposure signal;
   an upper cover part (12) able to be rotatably opened and closed with respect to the frame body (11); and

an exposure unit (152) configured to generate the exposure signal based on image data, the exposure unit (152) mounted on a lower surface of the upper cover part;

wherein, the exposure unit (152) comprises:

a laser beam emitter (153) configured to emit a laser beam corresponding to the exposure signal;

a rotation polygon mirror part (154) including a rotation polygon mirror (154a) configured to receive and deviate the laser beam;

an f-theta lens (155) configured to receive the deviated laser beam and generate a focused beam for emission; and

plural reflectors (156, 157) sequentially disposed on a predetermined optical path whose start point is the f-theta lens (155) and whose end point is a surface of a photoconductor drum (161) in the image formation unit (16), and sequentially arranged according to predetermined separation distances configured to receive the focused beam and reflect the focused beam plural times along the predetermined optical path so as to cause the focused beam to arrive at the surface of the photoconductor drum (161),

wherein, the plural reflectors (156, 157) include a forefront reflector (156) and an end reflector (157), the forefront reflector (156) configured to receive the focused beam, the end reflector configured to reflect the focused beam to the surface of the photoconductor drum (161); and

when the upper cover part (12) is in a closed state, a distance from the end reflector (157) to the surface of the photoconductor drum (161) is less than both the predetermined separation distances and a distance from the forefront reflector (156) to the rotation polygon mirror (154).

2. The image formation device (10) according to claim 1, wherein,

the plural reflectors (156, 157) include N reflectors, N being an integer greater or equal to two; the N reflectors are sequentially arranged along the predetermined optical path, and are sequentially called a "first reflector", a "second reflector", ..., and an "N-th reflector"; a distance between the first reflector and the second reflector is called a "first predetermined separation distance $I_1$", a distance between the second reflector and the third reflector is called a "second predetermined separation distance

$I_2$", ..., and a distance between the (N-1)-th reflector and the N-th reflector is called an "(N-1)-th separation distance $I_{N-1}$";

the first reflector serves as the forefront reflector, and a distance between the forefront reflector and the rotation polygon mirror is $D_f$;

the N-th reflector serves as the end reflector, and a distance between the end reflector and the surface of the photoconductor drum (161) is $D_e$; and

$D_f$, $D_e$, $I_1$, $I_2$, ..., and $I_{N-1}$ satisfy $D_e < I_{N-1} < I_2 < I_1 < ... < D_f$.

3. The image formation device (10) according to claim 2, wherein,

the N reflectors include two reflectors called a "first reflector" and a "second reflector";

the first reflector is the forefront reflector (156), and the second reflector is the end reflector (157); and

$$D_f : I_1 : D_e = 44\text{-}47 : 31\text{-}33 : 28\text{-}30.$$

4. The image formation device (10) according to claim 3, wherein,

$$D_f : I_1 : D_e = 45.5 : 31.3 : 30.5.$$

5. The image formation device (10) according to claim 4, wherein,
$D_e$ = 30.5 mm.

6. The image formation device (10) according to claim 4, wherein,
the laser beam emitter (153) emits two laser beams.

7. The image formation device (10) according to any one of claims 1 to 6, further comprising:
an exposure mechanism (15), configured to generate an exposure signal based on image data, comprising:

an installation tray (151) mounted on a lower surface of the upper cover part (12);

wherein the exposure unit (152) is disposed in the installation tray.

8. The image formation device (10) according to any one of claims 1 to 7, wherein:

the upper cover part (12) is installed on the frame body (11);

the exposure mechanism (15) is mounted on a lower surface of the upper cover part (12); and

the image formation unit (16) is configured to generate a toner image on a recording medium based on the exposure signal so as to carry out an image formation process.

9. The image formation device (10) according to claim 8, further comprising:
a scan unit (13) which is installed in the upper cover part (12) and is configured to scan a document so as to generate the image data.

10. The image formation device (10) according to claim 8, further comprising:

a fixing unit (17) configured to heat and fix the toner image on the recording medium so as to finish the image formation process,
wherein, the rotation polygon mirror part (154) includes a rotation polygon mirror (154a) configured to receive and deviate the laser beam and a drive motor (154b) connected to the rotation polygon mirror (154a) so as to drive the rotation polygon mirror (154a) to let it rotate, and the drive motor (154b) is disposed far away from the fixing unit (17).

**Patentansprüche**

1. Bildausbildungsvorrichtung (10), umfassend:

einen Rahmenkörper (11), der eine Bildausbildungseinheit (16) aufnimmt, wobei die Bildausbildungseinheit dazu konfiguriert ist, ein Bild auf Grundlage eines Belichtungssignals auszubilden;
ein oberes Abdeckteil (12), das in Bezug auf den Rahmenkörper (11) drehbar geöffnet und geschlossen werden kann; und
eine Belichtungseinheit (152), die dazu konfiguriert ist, das Belichtungssignal auf Grundlage von Bilddaten zu erzeugen, wobei die Belichtungseinheit (152) an einer unteren Oberfläche des oberen Abdeckteils montiert ist;
wobei die Belichtungseinheit (152) umfasst:

einen Laserstrahlemitter (153), der dazu konfiguriert ist, einen Laserstrahl zu emittieren, der dem Belichtungssignal entspricht;
ein Rotationspolygonspiegelteil (154), das einen Rotationspolygonspiegel (154a) beinhaltet, der dazu konfiguriert ist, den Laserstrahl zu empfangen und abzulenken;
ein F-Theta-Objektiv (155), das dazu konfiguriert ist, den abgelenkten Laserstrahl zu empfangen und einen fokussierten Strahl für die Emission zu erzeugen, und
mehrere Reflektoren (156, 157), die sequentiell auf einem vorbestimmten optischen Weg angeordnet sind, dessen Startpunkt das f-Theta-Objektiv (155) ist und dessen Endpunkt eine Oberfläche einer Fotoleitertrommel (161) in der Bildausbildungseinheit (16) ist, und die sequentiell gemäß vorbestimmten Trennabständen angeordnet sind, die dazu konfiguriert sind, den fokussierten Strahl zu empfangen und den fokussierten Strahl mehrere Male entlang des vorbestimmten optischen Weges zu reflektieren, um zu bewirken, dass der fokussierte Strahl auf der Oberfläche der Fotoleitertrommel (161) ankommt,
wobei die mehreren Reflektoren (156, 157) einen vorderen Reflektor (156) und einen Endreflektor (157) beinhalten, wobei der vordere Reflektor (156) dazu konfiguriert ist, den fokussierten Strahl zu empfangen, der Endreflektor dazu konfiguriert ist, den fokussierten Strahl auf die Oberfläche der Fotoleitertrommel (161) zu reflektieren, und wenn das obere Abdeckteil (12) in einem geschlossenen Zustand ist, ein Abstand von dem Endreflektor (157) zu der Oberfläche der Fotoleitertrommel (161) geringer als sowohl die vorbestimmten Trennungsabstände als auch ein Abstand von dem vorderen Reflektor (156) zu dem Rotationspolygonspiegel (154) ist.

2. Bildausbildungsvorrichtung (10) nach Anspruch 1, wobei,

die mehreren Reflektoren (156, 157) N Reflektoren beinhaltet, wobei N eine ganze Zahl größer oder gleich zwei ist;
die N Reflektoren sequentiell entlang des vorbestimmten optischen Weges angeordnet sind und sequentiell als ein "erster Reflektor", ein "zweiter Reflektor", ... und ein "N-ter Reflektor" bezeichnet werden;
ein Abstand zwischen dem ersten Reflektor und dem zweiten Reflektor als ein "erster vorbestimmter Trennungsabstand $I_1$" bezeichnet wird, ein Abstand zwischen dem zweiten Reflektor und dem dritten Reflektor als ein "zweiter vorbestimmter Trennungsabstand $I_2$" bezeichnet wird, ... und ein Abstand zwischen dem (N-1)-ten Reflektor und dem N-ten Reflektor als ein "(N-1)-ter Trennungsabstand $I_{N-1}$" bezeichnet wird,
der erste Reflektor als der vordere Reflektor dient, und ein Abstand zwischen dem vorderen Reflektor und dem Rotationspolygonspiegel $D_f$ ist;
der N-te Reflektor als der Endreflektor dient, und ein Abstand zwischen dem Endreflektor und der Oberfläche der Fotoleitertrommel (161) $D_e$ ist; und
$D_f$, $D_e$, $I_1$, $I_2$, ..., und $I_{N-1}$ $D_e < I_{N-1} < I_2 < I_1 < ...$ $< D_f$ erfüllen.

3. Bildausbildungsvorrichtung (10) nach Anspruch 2, wobei

> die N Reflektoren zwei Reflektoren beinhalten, die als ein "erster Reflektor" und eub "zweiter Reflektor" bezeichnet werden;
> der erste Reflektor der vordere Reflektor (156) ist, und der zweite Reflektor der Endreflektor (157) ist; und

$$D_f : I_1 : D_e = 44\text{-}47 : 31\text{-}33 : 28\text{-}30.$$

4. Bildausbildungsvorrichtung (10) nach Anspruch 3, wobei

$$D_f : I_1 : D_e = 45,5 : 31,3 : 30,5.$$

5. Bildausbildungsvorrichtung (10) nach Anspruch 4, wobei
$D_e = 30,5$ mm.

6. Bildausbildungsvorrichtung (10) nach Anspruch 4, wobei
der Laserstrahlemitter (153) zwei Laserstrahlen emittiert.

7. Bildausbildungsvorrichtung (10) nach einem der Ansprüche 1 bis 6, ferner umfassend:
einen Belichtungsmechanismus (15), der dazu konfiguriert ist, ein Belichtungssignal auf Grundlage von Bilddaten zu erzeugen, umfassend:

> eine Installationsschale (151), die an einer unteren Oberfläche des oberen Abdeckteils (12) montiert ist;
> wobei die Belichtungseinheit (152) in der Installationsschale angeordnet ist.

8. Bildausbildungsvorrichtung (10) nach einem der Ansprüche 1 bis 7, wobei:

> das obere Abdeckteil (12) auf dem Rahmenkörper (11) installiert ist;
> der Belichtungsmechanismus (15) an einer unteren Oberfläche des oberen Abdeckteils (12) angebracht ist; und
> die Bildausbildungseinheit (16) dazu konfiguriert ist, ein Tonerbild auf einem Aufzeichnungsmedium auf Grundlage des Belichtungssignals zu erzeugen, um einen Bildausbildungsprozess auszuführen.

9. Bildausbildungsvorrichtung (10) nach Anspruch 8, die ferner umfasst:
eine Scaneinheit (13), die in dem oberen Abdeckteil (12) installiert ist und dazu konfiguriert ist, ein Dokument zu scannen, um die Bilddaten zu erzeugen.

10. Bildausbildungsvorrichtung (10) nach Anspruch 8, ferner umfassend:

> eine Fixiereinheit (17), die dazu konfiguriert ist, das Tonerbild auf dem Aufzeichnungsmedium zu erhitzen und zu fixieren, um den Bilderzeugungsprozess zu beenden,
> wobei das Rotationspolygonspiegelteil (154) einen Rotationspolygonspiegel (154a), der dazu konfiguriert ist, den Laserstrahl zu empfangen und abzulenken, und einen Antriebsmotor (154b) beinhaltet, der mit dem Rotationspolygonspiegel (154a) verbunden ist, um den Rotationspolygonspiegel (154a) anzutreiben, um ihn rotieren zu lassen, und
> der Antriebsmotor (154b) weit entfernt von der Fixiereinheit (17) angeordnet ist.

## Revendications

1. Dispositif de formation d'image (10), comprenant :

> un corps de bâti (11) logeant une unité de formation d'image (16), l'unité de formation d'image étant configurée pour former une image sur la base d'un signal d'exposition ;
> une partie à couvercle supérieur (12) capable d'être ouverte et fermée de façon rotative par rapport au corps de bâti (11) ; et
> une unité d'exposition (152) configurée pour générer le signal d'exposition sur la base de données d'image, l'unité d'exposition (152) étant montée sur une surface inférieure de la partie à couvercle supérieur ;
> dans lequel l'unité d'exposition (152) comprend :

>> un émetteur de faisceau laser (153) configuré pour émettre un faisceau laser correspondant au signal d'exposition ;
>> une partie à miroir polygonal à rotation (154) incluant un miroir polygonal à rotation (154a) configuré pour recevoir et dévier le faisceau laser ;
>> une lentille f-thêta (155) configurée pour recevoir le faisceau laser dévié et générer un faisceau focalisé pour l'émission ; et
>> une pluralité de réflecteurs (156, 157) séquentiellement disposés sur un chemin optique prédéterminé dont le point de départ est la lentille f-thêta (155) et dont le point de fin est une surface d'un tambour photoconducteur (161) dans l'unité de formation d'image (16), et séquentiellement agencés selon des distances de séparation prédéterminées configurées pour recevoir le faisceau focalisé et réfléchir le faisceau focalisé une pluralité de fois le long du chemin optique prédéterminé afin de faire en sorte que le faisceau focalisé arrive à la surface du tambour photoconducteur (161),

dans lequel la pluralité de réflecteurs (156, 157) incluent un réflecteur d'avant-plan (156) et un réflecteur terminal (157), le réflecteur d'avant-plan (156) étant configuré pour recevoir le faisceau focalisé, le réflecteur terminal étant configuré pour réfléchir le faisceau focalisé vers la surface du tambour photoconducteur (161) ; et

lorsque la partie à couvercle supérieur (12) est dans un état fermé, une distance depuis le réflecteur terminal (157) jusqu'à la surface du tambour photoconducteur (161) est inférieure à la fois aux distances de séparation prédéterminées et à une distance depuis le réflecteur d'avant-plan (156) jusqu'au miroir polygonal à rotation (154).

**2.** Dispositif de formation d'image (10) selon la revendication 1, dans lequel

la pluralité de réflecteurs (156, 157) incluent N réflecteurs, N étant un nombre entier relatif supérieur ou égal à deux ;
les N réflecteurs sont séquentiellement agencés le long du chemin optique prédéterminé, et sont séquentiellement appelés « premier réflecteur », « deuxième réflecteur », ... , et « N-ième réflecteur » ;
une distance entre le premier réflecteur et le deuxième réflecteur est appelée « première distance de séparation prédéterminée $I_1$ », une distance entre le deuxième réflecteur et le troisième réflecteur est appelée « deuxième distance de séparation prédéterminée $I_2$ », ... , et une distance entre le (N-1)-ième réflecteur et le N-ième réflecteur est appelée « (N-1)-ième distance de séparation $I_{N-1}$ » ;
le premier réflecteur sert de réflecteur d'avant-plan, et une distance entre le réflecteur d'avant-plan et le miroir polygonal à rotation est $D_f$ ;
le N-ième réflecteur sert de réflecteur terminal, et une distance entre le réflecteur terminal et la surface du tambour photoconducteur (161) est $D_e$ ; et
$D_f$, $D_e$, $I_1$, $I_2$, ..., et $I_{N-1}$ satisfont à $D_e < I_{N-1} < I_2 < I_1 < ... < D_f$.

**3.** Dispositif de formation d'image (10) selon la revendication 2, dans lequel

les N réflecteurs incluent deux réflecteurs appelés « premier réflecteur » et « deuxième réflecteur » ;
le premier réflecteur est le réflecteur d'avant-plan (156), et le deuxième réflecteur est le réflecteur terminal (157) ; et

$$D_f : I_1 : D_e = 44\text{-}47 : 31\text{-}33 : 28\text{-}30.$$

**4.** Dispositif de formation d'image (10) selon la revendication 3, dans lequel

$$D_f : I_1 : D_e = 45,5 : 31,3 : 30,5.$$

**5.** Dispositif de formation d'image (10) selon la revendication 4, dans lequel $D_e = 30,5$ mm.

**6.** Dispositif de formation d'image (10) selon la revendication 4, dans lequel
l'émetteur de faisceau laser (153) émet deux faisceaux laser.

**7.** Dispositif de formation d'image (10) selon l'une quelconque des revendications 1 à 6, comprenant en outre :
un mécanisme d'exposition (15), configuré pour générer un signal d'exposition sur la base de données d'image, comprenant :

un plateau d'installation (151) monté sur une surface inférieure de la partie à couvercle supérieur (12) ;
dans lequel l'unité d'exposition (152) est disposée dans le plateau d'installation.

**8.** Dispositif de formation d'image (10) selon l'une quelconque des revendications 1 à 7, dans lequel :

la partie à couvercle supérieur (12) est installée sur le corps de bâti (11) ;
le mécanisme d'exposition (15) est monté sur une surface inférieure de la partie à couvercle supérieur (12) ; et
l'unité de formation d'image (16) est configurée pour générer une image en encre en poudre sur un support d'enregistrement sur la base du signal d'exposition afin de réaliser un procédé de formation d'image.

**9.** Dispositif de formation d'image (10) selon la revendication 8, comprenant en outre :
une unité de balayage (13) qui est installée dans la partie à couvercle supérieur (12) et est configurée pour balayer un document afin de générer les données d'image.

**10.** Dispositif de formation d'image (10) selon la revendication 8, comprenant en outre :

une unité de fixage (17) configurée pour chauffer et fixer l'image en encre en poudre sur le support d'enregistrement afin de finir le procédé de formation d'image,
dans lequel la partie à miroir polygonal à rotation (154) inclut un miroir polygonal à rotation (154a) configuré pour recevoir et dévier le faisceau laser et un moteur d'entraînement (154b) relié au miroir polygonal à rotation (154a) afin d'entraîner le miroir polygonal à rotation (154a) pour le mettre en rotation, et
le moteur d'entraînement (154b) est disposé de façon éloignée de l'unité de fixage (17).

# FIG.1

# FIG.2

EP 3 156 849 B1

# FIG.3

# FIG.4

# FIG.5

EP 3 156 849 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008096957 A
- JP 2006235177 A
- JP H0535055 A
- EP 1582907 A1